# EUROPÄISCHE PATENTSCHRIFT

(11) **EP 3 537 334 B1**
(45) Veröffentlichungstag und Bekanntmachung des Hinweises auf die Patenterteilung: **03.06.2020**
(21) Anmeldenummer: 19154265.3
(22) Anmeldetag: 29.01.2019
(51) Int. Cl.: G06K 7/10, G02B 5/30, G03B 11/00, G03B 15/03, G03B 17/14

(54) **KAMERA**
CAMERA
CAMÉRA

(30) Priorität: 05.03.2018 DE 102018104906
(43) Veröffentlichungstag der Anmeldung: 11.09.2019
(73) Patentinhaber: SICK AG, 79183 Waldkirch (DE)
(72) Erfinder: Pfrengle, Thomas, 79258 Hartheim (DE); Schneider, Florian, Dr., 79276 Reute (DE)

(56) Entgegenhaltungen:
- DE-U1-202014 102 452
- JP-A- H06 222 430
- US-A1- 2013 128 104
- US-A1- 2016 034 734

## Beschreibung

Die Erfindung betrifft eine Kamera, insbesondere einen Codeleser, mit einem Bildsensor zur Erzeugung von Bilddaten aus Empfangslicht aus einem Erfassungsbereich nach dem Oberbegriff von Anspruch 1.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Um von variablen Lichtbedingungen unabhängig zu sein, verwenden viele industrielle Kamerasysteme eine eigene Beleuchtung. Für einen besseren Umgang mit glänzenden oder spiegelnden Objekten wird polarisiertes Licht verwendet. Dabei sind Sende- und Empfangspfad jeweils mit einem linearen Polarisationsfilter versehen. Die Ausrichtung der beiden Polarisationsfilter ist um 90° gedreht. Bei industriellen Kameras sind die Polarisationsfilter fest in dem Kamerasystem verbaut. Nachträglicher Einbau oder Austausch sind allenfalls möglich, wenn dafür das Gerät auseinandergebaut und eine die Front schützende Haube der Kamera abgeschraubt wird.

Aus der DE 10 2010 014 783 A1 ist ein Barcodescanner bekannt, in dessen Strahlengang für die Sende- und Empfangslichtstrahlen ein Dünnfilm-Polarisationsfilter angeordnet ist.

Die US 9 033 237 B1 offenbart ein Handgerät zum Lesen von geprägten Codes (DPM, Direct Part Marking). Solche Codes werden unter sehr flachem Einstrahlwinkel der Beleuchtung gelesen, die demzufolge mit einigem Abstand und schräger Ausrichtung zu dem Bildsensor steht. Im Sende- und Empfangsstrahlengang ist je ein Polarisationsfilter angeordnet.

In der US 9 542 583 B2 wird ein Codeleser vorgestellt, der eine polarisierte und eine nicht polarisierte Lichtquelle umfasst, so dass je nach Bedarf eine geeignete Beleuchtung ausgewählt werden kann.

Die WO 2015/019370 A1 befasst sich mit einem weiteren Barcodescanner mit Polarisationsfiltern, wobei das Polarisationsfilter des Lichtsenders einen Teil des Laserstrahls polarisiert und für einen weiteren Teil des Laserstrahls durchsichtig ist.

Bei allen diesen herkömmlichen Vorrichtungen ist ein Austausch des Polarisationsfilters nicht vorgesehen.

In der JP06222430A1 wird ein Polarisationsfilter wahlweise an einem Blitzlicht befestigt, der seitlich zwei Polarisatoren für das Blitzlicht und dazwischen einen um 90° gedrehten Polarisator vor der Empfangslinse aufweist.

Bekannt sind weiterhin Polarisationsfilter für Fotoapparate, die auf das Objektiv aufgesetzt werden. Das betrifft dann aber allein den Empfangsstrahlengang.

Es ist daher Aufgabe der Erfindung, die Erfassung mit einer Kamera zu verbessern.

Diese Aufgabe wird durch eine Kamera nach Anspruch 1 gelöst. Die Kamera erzeugt mit einem Bildsensor Bilddaten aus Empfangslicht. Eine Beleuchtungseinheit mit mindestens einer Lichtquelle beleuchtet dafür den Erfassungsbereich der Kamera. Ein Polarisationsfilter polarisiert Sendelicht und Empfangslicht. Das Polarisationsfilter ist vorzugsweise dafür ausgebildet, eine lineare Polarisation zu erzeugen, und zwar für Empfangslicht und Sendelicht um 90° zueinander versetzt.

Die Erfindung geht nun von dem Grundgedanken aus, das Polarisationsfilter nachträglich auszutauschen. Dabei soll der Begriff Austausch das Hinzufügen oder Entfernen, also ein Umrüsten von polarisiertem zu nicht polarisiertem Licht und umgekehrt, ebenso umfassen wie den Wechsel auf ein anderes Polarisationsfilter oder einen anderen Einbau des zuvor schon verbauten Polarisationsfilters, um anders polarisiertes Licht zu erhalten. Um den Austausch erheblich zu vereinfachen oder überhaupt erst möglich zu machen, ist das Polarisationsfilter als nachträglich von außen austauschbares Zusatzmodul ausgebildet.

Die Erfindung hat den Vorteil, dass durch den Austausch eine schnelle, flexible Adaption an neue Anforderungen oder neue Anwendungen möglich ist. Der Wechsel erfolgt sehr schnell, ohne Werkzeug, und es bedarf dazu keinerlei besonderer Qualifikation.

Das Polarisationsfilter ist bevorzugt als Aufsteckmodul mit einer Schnappverbindung ausgebildet. Dazu sind beispielsweise Schnapphaken an dem Aufsteckmodul vorgesehen. Die Kamera beziehungsweise deren Gehäuse kann an seiner Front passende Aufnahmen, einen Überstand oder eine Nut zum Einhaken aufweisen. Vorzugsweise ist aber dem Design der Kamera ohne Zusatzmodul nicht anzusehen, dass ein Zusatzmodul angebracht werden kann. Die Nachrüstung für polarisiertes Licht durch das Zusatzmodul ist dann gänzlich nachträglich und völlig optional möglich.

Das Polarisationsfilter ist vorzugsweise als Aufsteckmodul mit einer Magnetverbindung ausgebildet. Dazu können Magnete an dem Zusatzmodul und der Kamera vorgesehen sein, oder es befinden sich Magnete nur an einer Seite, während die andere Seite ein magnetisches Material aufweist. Besonders bevorzugt sind die Magnete auf Seiten des Zusatzmoduls, denn dann benötigt die Kamera lediglich an der Frontseite ihres Gehäuses entsprechende metallische Bereiche, was auch ohne besonderes Design für das Zusatzmodul häufig der Fall ist.

Das Polarisationsfilter ist bevorzugt vor einer Frontscheibe der Kamera angeordnet. Die Kamera braucht also gar nicht verändert oder geöffnet zu werden, um das Zusatzmodul anzufügen. Alternativ weist das Zusatzmodul selbst die Frontscheibe auf. Hier sind dann beide Reihenfolgen mit Polarisationsfilter innen und Frontscheibe außen oder umgekehrt denkbar. Außerdem ist vorstellbar, das Polarisationsfilter in die Frontscheibe zu integrieren. Um ein solches Zusatzmodul anzubringen, wird die Frontscheibe durch das Zusatzmodul ersetzt. Wenn die Frontscheibe schon werkzeuglos befestigbar ist, beispielsweise durch einen Schnapp- oder Magnetmechanismus, ist dies sehr rasch und problemlos möglich.

Das Zusatzmodul weist vorzugsweise einen Wechselrahmen auf, der ein Gehäuse der Kamera zu dessen Fronseite hin abschließt. Der Wechselrahmen sitzt zur Kamera hin auf einem Gehäuse und/oder einer Leiterkarte der Kamera auf. Nach außen hin schließt die Frontscheibe auf dem Wechselrahmen die Kamera, wobei eine Öffnung für ein Empfangsobjektiv verbleiben kann. Das Polarisationsfilter befindet sich je nach Ausführungsform innen oder außen am Wechselrahmen, wobei für das Polarisationsfilter die Positionen innerhalb und außerhalb der Frontscheibe sowie darin integriert möglich sind. Der Wechselrahmen umgibt vorzugsweise die Lichtquellen der Beleuchtungseinheit.

Das Zusatzmodul ist bevorzugt rechteckig. Damit ist es besonders geeignet für eine im Wesentlichen quaderförmige Kamera, die ihre frontale, rechteckige Seite insgesamt oder doch weitgehend für eine Frontscheibe mit Lichtaustritt der Beleuchtungseinheit oder weitere Beleuchtungen etwa für eine Zielvorrichtung beziehungsweise eine Leuchtanzeige oder ein projiziertes Benutzerfeedback nutzt. Ein Zusatzmodul mit Wechselrahmen bildet dann die rechteckige Frontseite.

Die Beleuchtungseinheit weist bevorzugt mehrere separat ansteuerbare Gruppen von Lichtquellen auf. Jede der vorzugsweise gleich großen Gruppen umfasst mindestens eine Lichtquelle. Durch gezielte Aktivierung oder Intensitätsanpassung der Gruppen entstehen unterschiedliche Beleuchtungsszenarien, die durch Parameter vorgegeben, aber auch durch Feedback einer Auswertung der Bilddaten eingestellt oder eingelernt werden können. Vorzugsweise sind vier Gruppen je Kante oder Ecke eines als rechteckiger Rahmen ausgebildeten Umlenkelements vorgesehen. Dadurch wird dann durch einzelne Ansteuerung der Gruppen die Beleuchtung aus allen vier Richtungen veränderbar.

Die Lichtquellen einer Gruppe weisen bevorzugt eine andere Farbe auf als die Lichtquellen einer anderen Gruppe. Es gibt daher mindestens zwei Gruppen von Lichtquellen und mindestens zwei Farben. Möglich sind aber auch mehr Gruppen und mehr Farben, wobei nicht alle Gruppen unterschiedliche Farben aufweisen müssen. Manche Strukturen, insbesondere Codierungen bestimmter Farben auf bestimmtem Grund, lassen sich besser in einem passenden Beleuchtungsspektrum lesen. Das kann durch Einstellen einer Farbe für die Lichtquellen, aber auch Vermischen von Farben erreicht werden. Je nach Ausführungsform sind verschiedenfarbige Lichtquellen oder in ihrer Farbe umschaltbare Lichtquellen vorgesehen, wie mehrfarbige LEDs.

Das Zusatzmodul ist bevorzugt mit einer ersten Fläche zum Polarisieren des Sendelichts und einer zweiten Fläche zum Polarisieren des Empfangslichts ausgebildet. Die Polarisationsrichtung der beiden Flächen ist vorzugsweise um 90° gegeneinander verdreht. Das sorgt dafür, dass Glanzreflexe ohne Polarisationsdrehung praktisch nicht erfasst werden. Die beiden Flächen liegen besonders bevorzugt in derselben Ebene. Dadurch wird ein sehr kompakter Aufbau möglich.

Das Zusatzmodul weist bevorzugt eine Fläche für den Durchtritt von Sendelicht ohne Polarisierung auf. Das ist einerseits nützlich, wenn mehrere Lichtquellen oder Gruppen von Lichtquellen separat ansteuerbar sind. Durch Aktivierung entsprechend an einer polarisierenden oder nicht polarisierenden Fläche des Zusatzmoduls angeordneter Lichtquellen wird gezielt entsprechendes Sendelicht erzeugt. Bei mehrfarbigen Lichtquellen lässt sich auch die Farbe oder eine Kombination aus Farbe und Polarisation wählen. Vorstellbar ist auch eine weitere Fläche, die Sendelicht polarisiert, jedoch mit anderer Polarisationsrichtung als die erste Fläche. Dann lässt sich auswählen, ob Glanzreflexe bei Übereinstimmung der sende- und empfangsseitigen Polarisationsrichtung exklusiv durchgelassen oder bei Versatz um 90° gezielt weggefiltert werden. Andererseits kann die Auswahl des Sendelichts nicht durch Ansteuerung von bestimmten Lichtquellen, sondern durch bestimmte Anordnung des Zusatzmoduls bezüglich der Lichtquellen erfolgen.

Das Zusatzmodul ist vorzugsweise in verschiedenen Orientierungen an der Kamera anbringbar. Dabei ist insbesondere an eine Drehung um 180°, je nach Form der Kamera und des Zusatzmoduls auch 90° oder einen anderen Winkel zu denken. Die Polarisationsfilter sind dann vorzugsweise gerade nicht entsprechend drehsymmetrisch in dem Zusatzmodul angeordnet. Über die Orientierung des Zusatzmoduls bei dessen Anbringung kann gewählt werden, welche Lichtquellen polarisiert werden und welche nicht, oder es wird so eine bestimmte Polarisationsrichtung festgelegt.

Die Kamera weist bevorzugt einen Anwesenheitssensor auf, um zu erkennen, ob ein Zusatzmodul im Strahlengang der Kamera angeordnet ist. Der Anwesenheitssensor kann auch die Information liefern, welches Zusatzmodul aufgesteckt ist, beziehungsweise welche Polarisationen und Polarisationsrichtungen das Zusatzmodul erzeugt. Der Anwesenheitssensor ist beispielsweise auf Basis mindestens eines Hallsensors oder eines induktiven Sensors aufgebaut, welcher den Rahmen des Polarisationsfilters erkennt. Durch Mehrfachanordnungen und Materialien beziehungsweise Materialdicken kann eine Art einfache Codierung zur Unterscheidung verschiedener Zusatzmodule und/oder Orientierungen vorgegeben werden. Der Anwesenheitssensor schafft die Möglichkeit, Steuerungen wie eine Leistung des Lichtsenders, eine Belichtungszeit oder eine Empfindlichkeit des Bildsensors gezielt und automatisch an das Zusatzmodul anzupassen. Außerdem kann so aus einem übergeordneten System abgefragt werden, welche Konfiguration der Kamera mit ihrem aktuell erfassten Zusatzmodul vorliegt.

Die Kamera weist bevorzugt eine Steuer- und Auswertungseinheit auf, die dafür ausgebildet ist, in den Bilddaten Codebereiche zu identifizieren und deren Codeinhalt auszulesen. Damit wird die Kamera zu einem kamerabasierten Codeleser für Barcodes und/oder 2D-Codes nach diversen Standards, gegebenenfalls auch für eine Texterkennung (OCR, Optical Character Reading). Eine Steuer- und Auswertungseinheit ist im Übrigen vorzugsweise auch ohne Codelesefunktionalität vorgesehen, welche die diversen Aufgaben in der Kamera steuert und ausführt, wie die Bildaufnahme, eine Beleuchtung, die Messung von tatsächlicher und benötigter Fokuslage und deren Anzeige.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit Beleuchtung;
- Fig. 2: eine dreidimensionale Ansicht einer Kamera mit einem Zusatzmodul, das durch einen Schnappmechanismus angebracht ist;
- Fig. 3: eine dreidimensionale Ansicht einer Kamera mit einem Zusatzmodul, das durch einen Magnetmechanismus angebracht ist;
- Fig. 4a: eine Frontalansicht einer Kamera ohne aufgestecktes Zusatzmodul;
- Fig. 4b: eine Frontalansicht einer Kamera mit aufgestecktem Zusatzmodul;
- Fig. 4c: eine Frontalansicht einer Kamera mit gegenüber Figur 4b um 180° verdreht aufgestecktem Zusatzmodul;
- Fig. 5: eine schematische Schnittdarstellung einer Kamera mit Anwesenheitssensor für ein Zusatzmodul; und
- Fig. 6: eine dreidimensionale Ansicht einer beispielhaften Anwendung der Kamera in Montage an einem Förderband.

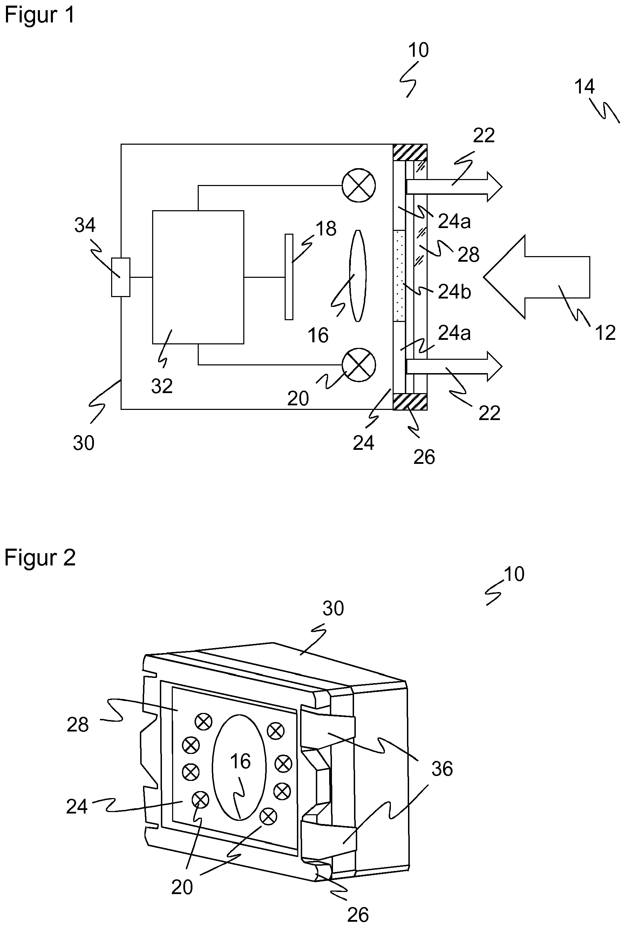

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert.

Um den Erfassungsbereich 14 während einer Aufnahme der Kamera 10 auszuleuchten, umfasst die Kamera 10 eine Beleuchtungseinheit, die in Figur 1 in Form zweier Lichtquellen 20 dargestellt ist, beispielsweise LEDs oder auch Laserdioden. Die Beleuchtungseinheit erzeugt Sendelicht 22, das in den Erfassungsbereich 14 ausgesandt wird. Den Lichtquellen 20 kann eine nicht gezeigte Sendeoptik zugeordnet sein, um das Sendelicht 22 in einer gewünschten Weise zu beeinflussen.

Im Austrittsbereich des Sendelichts 22 und im Eintrittsbereich des Empfangslichts ist in der Kamera 10 ein Polarisationsfilter 24 angeordnet. Das Polarisationsfilter 24 weist eine erste Fläche 24a zum Polarisieren des Sendelichts 22 und eine zweite Fläche 24b zum Polarisieren des Empfangslichts 12 auf. Vorzugsweise sind die beiden Flächen 24a-b für eine lineare Polarisation mit gegenseitigem Versatz von 90° ausgebildet.

Das Polarisationsfilter 24 ist in einem Aufsteckrahmen 26 angeordnet, der außerdem eine Frontscheibe 28 der Kamera 10 hält. Auf diese Weise wird eine Frontseite eines Gehäuses 30 der Kamera geschlossen. Der Aufsteckrahmen 26 mit dem Polarisationsfilter 24 und der Frontscheibe 28 bildet ein Aufsteck- oder Zusatzmodul, mit dem nachträglich die Polarisationseigenschaften der Kamera 10 verändert werden. Dazu gibt es mehrere Möglichkeiten: Wechsel zwischen einem Betrieb mit Polarisation und ohne Polarisation durch Verwendung eines Zusatzmoduls wie dargestellt oder eines Aufsteckrahmens 26 lediglich mit der Frontscheibe 28, Wechsel der Polarisationseigenschaften durch Austausch gegen ein Zusatzmodul mit anderem Polarisationsfilter 24 oder Aufstecken des Zusatzmoduls in anderer Anordnung, insbesondere um 180° um die optische Achse der Empfangsoptik 16 verdreht.

In Figur 1 ist das Polarisationsfilter 24 innen hinter der Frontscheibe 28 angeordnet. Eine vertauschte Reihenfolge mit Polarisationsfilter 24 außen ist alternativ auch möglich. In einer weiteren Ausführungsform ist das Polarisationsfilter 24 in die Frontscheibe 28 integriert, direkt damit verbunden oder fungiert als Frontscheibe 28.

Eine Steuer- und Auswertungseinheit 32 ist mit der Beleuchtungseinheit und dem Bildsensor verbunden und für die Steuerungs-, Auswertungs- und sonstigen Koordinierungsaufgaben in der Kamera 10 zuständig. Sie liest also Bilddaten des Bildsensors 18 aus, um sie zu verarbeiten und an einer Schnittstelle 34 auszugeben. Es sind auch eigene Auswertungen der Bilddaten denkbar, insbesondere das Decodieren von Codebereichen in den Bilddaten, womit die Kamera 10 zu einem kamerabasierten Codeleser wird.

Figur 2 zeigt eine dreidimensionale Ansicht einer Kamera 10 mit einem Zusatzmodul, dass durch einen Schnappmechanismus auf die Kamera 10 aufgesteckt wird. Die Kamera 10 weist eine rechteckige Front auf, wobei Variationen wie gerundete Ecken möglich bleiben. Aufsteckrahmen 26 und Frontscheibe 28 sind an die rechteckige Form angepasst. Wie zu erkennen, ist ein sehr flacher Frontalbereich für die Beleuchtungseinheit und das Polarisationsfilter 24 möglich, und je nach Komplexität der Empfangsoptik 16 und der Elektronik, etwa der Steuer- und Auswertungseinheit 32, auch ein insgesamt sehr flacher Geräteaufbau wie dargestellt oder mit noch geringerer Bautiefe.

Das Zusatzmodul beziehungsweise der Aufsteckrahmen 26 weist in der Ausführungsform gemäß Figur 2 mehrere Schnapphaken 36 auf, hier beispielhaft vier, die an dem Gehäuse 30 einschnappen. Dort kann eine Rille, ein Überstand oder dergleichen vorgesehen sein, um den Schnapphaken 36 besseren Halt zu geben. Die Schnapphaken 36 sorgen für eine stabile Position des Zusatzmoduls und sind dennoch jederzeit ohne Werkzeug lösbar, um das Zusatzmodul zu entfernen oder ein anderes Zusatzmodul anzubringen.

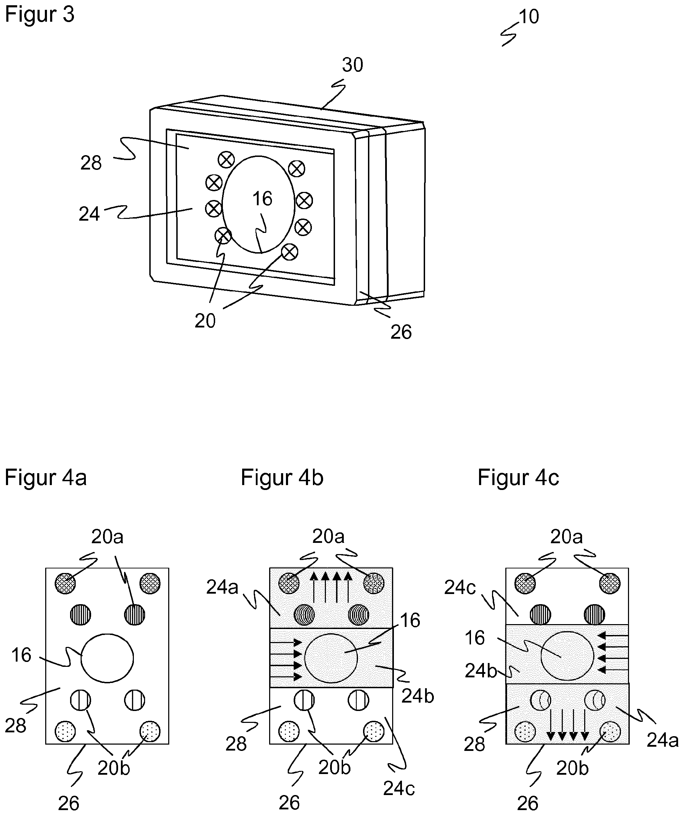

Figur 3 zeigt eine dreidimensionale Ansicht einer Kamera 10 mit einem Zusatzmodul, das durch eine Magnethalterung an der Kamera 10 angebracht wird. Bei diesem magnetischen Befestigungskonzept befindet sich an der Kamera 10 oder an dem Aufsteckrahmen 26 ein hartmagnetisches Material. Die Gegenseite ist entweder mit einem weich- oder einem hartmagnetischen Material ausgeführt. Bevorzugt sind nur an dem Aufsteckrahmen 26 aktive Magnete vorgesehen, während das Gehäuse 30 im vorgesehenen Kontaktbereich lediglich magnetisches Material aufweist. Dann muss nämlich die Kamera 10 gar nicht weiter modifiziert werden, sofern ihr Gehäuse 30 ausreichend magnetisches Metall enthält.

Die Figuren 2 und 3 zeigen zwei Beispiele für einen werkzeuglosen, sehr einfachen Austauschmechanismus des Zusatzmoduls. Es gibt dafür weitere Möglichkeiten, etwa innen in Öffnungen eingreifende Haken oder einen umlaufenden, auf die Frontseite des Gehäuses 30 aufschnappenden Rand des Aufsteckrahmens 26. Die gezeigten Beispiele sind also nicht abschließend. Prinzipiell kann der Aufsteckrahmen 26 auch mit einer oder mehreren Schrauben fixiert werden. Das ist immer noch einfacher als der herkömmliche Aufbau, weil das Polarisationsfilter 24 auch bei Verwendung von Schrauben sehr einfach von außen zugänglich ist, ohne weitere Teile abnehmen zu müssen. Schrauben kommen aber in erster Linie bei besonderer mechanischer Beanspruchung durch Rütteln oder Vibrieren in Frage, und solche Bedingungen sind für eine Kamera 10 ohnehin in der Regel zu meiden. Das bevorzugte Prinzip des Austauschs des Zusatzmoduls ist werkzeuglos und damit insbesondere ohne Schrauben.

Die Figuren 4a-c zeigen eine Frontalansicht der Kamera 10. Dabei ist in Figur 4a kein Zusatzmodul, in Figur 4b ein Zusatzmodul mit einem Polarisationsfilter 24 mit drei Flächen 24a-c und in Figur 4c das Zusatzmodul gemäß Figur 4b um 180° verdreht aufgesteckt. Der Aufsteckrahmen 26 ist also vorteilhafterweise so ausgebildet, dass auch eine um 180° gedrehte Befestigung möglich wird.

In der gezeigten Ausführungsform sind Lichtquellen 20a-b unterschiedlicher Farben verwendet, wie durch Schraffuren angedeutet, beispielsweise rot und blau. Alternativ ist denkbar, mehrere Farben schon innerhalb einer jeweiligen Lichtquelle 20a-b zu ermöglichen, wie bei einer mehrfarbigen LED, oder es werden Lichtquellen 20a-b unterschiedliche Farben nebeneinander eingesetzt, die wahlweise für bestimmte Farben aktiviert werden. Durch Farbwechsel werden manche Strukturen besser erkennbar, etwa je nach Druckfarbe und Untergrund Codes besser in rotem oder in blauem Licht gelesen.

Vorzugsweise sind die Lichtquellen 20a-b getrennt ansteuerbar und ermöglichen dadurch variable Beleuchtungszonen. Um die Schaltungskomplexität zu verringern, kann es genügen, Gruppen von Lichtquellen 20a-b nur gemeinsam anzusteuern. In der gezeigten Ausführungsform könnten die jeweils gleichfarbigen Lichtquellen 20a-b jeweils eine von zwei Gruppen bilden. Mehr Gruppen oder andere Gruppen sind ebenso denkbar, etwa vier Gruppen entsprechend den Sektoren, eine innere und eine äußere Gruppe und dergleichen. Auf diese Weise lässt sich gezielt eine Beleuchtung aus bestimmten Richtungen erzeugen, insbesondere im Zusammenspiel mit einer Bildverarbeitung der Bilddaten des Bildsensors 18 in der Steuer- und Auswertungseinheit 32, um auf diesem Weg eine für die jeweilige Anwendung bestmögliche Beleuchtungseinstellung zu finden.

In der Konfiguration gemäß Figur 4a ist kein Zusatzmodul mit Polarisationsfilter 24 angebracht, beispielsweise ein Aufsteckrahmen nur mit der Frontscheibe 28. Die Kamera 10 arbeitet folglich mit nicht polarisiertem Sendelicht 22 und Empfangslicht 12. Verschiedene Farben und/oder Beleuchtungszonen bleiben möglich.

In der Konfiguration gemäß Figur 4b ist ein Zusatzmodul mit einem Polarisationsfilter aufgesteckt, das eine erste Fläche 24a mit linearer Polarisation in einer ersten Richtung für das Sendelicht 22 der Lichtquellen 20a, hier beispielhaft nach oben, eine zweite Fläche 24b mit um 90° verdrehter linearer Polarisation für das Empfangslicht 12, hier beispielhaft nach unten, und einer dritte Fläche 24c ohne Polarisation für das Sendelicht 22 der Lichtquellen 20b aufweist. Durch Aktivierung der oberen Lichtquellen 20a oder der unteren Lichtquellen 20b ist dann möglich, Bilder mit oder ohne polarisiertes Sendelicht aufzunehmen. Dabei können natürlich die Farben der Lichtquellen 20a-b anders verteilt sein oder nur Lichtquellen 20a-b einer Farbe verwendet werden, damit die Wahl der Polarisation nicht an die Wahl der Farbe gebunden ist. Ohnehin ist die Ausgestaltung des Polarisationsfilters 24 nur ein vorteilhaftes Beispiel. Es können mehr Flächen vorgesehen sein, insbesondere mit jeweils unterschiedlichen Polarisationsrichtungen, um auch diese auswählbar zu machen, und umgekehrt lediglich eine einzige polarisierende Fläche für alle Lichtquellen 20a-b, in der sich dann zentral die zweite Fläche 24b für das Empfangslicht 12 befindet.

Durch Aufteilung des Polarisationsfilters 24 in Flächen 24a-c mit unterschiedlichen Polarisationseigenschaften und Ansteuerung bestimmter Gruppen von Lichtquellen 20a-b lassen sich so ohne weiteren Umbau mit einem anderen Zusatzmodul Beleuchtungszonen und Polarisationseigenschaften auswählen. In Kombination mit Lichtquellen 20a-b mehrerer Farben sind im Betrieb Polarisationseigenschaften und/oder Beleuchtungsspektrum anpassbar.

Wenn die Variabilität durch ein und dasselbe Zusatzmodul nicht ausreicht, kann es durch ein anderes Zusatzmodul ausgetauscht werden, das die gewünschten Eigenschaften mitbringt. Eine besonders vorteilhafte Ausführungsform dafür illustriert die Konfiguration gemäß Figur 4c. Dabei wird kein neues Zusatzmodul aufgesteckt, sondern das Zusatzmodul aus Figur 4b um 180° gedreht. Dann wird mit vertauschten Rollen das Sendelicht 22 der oberen Lichtquellen 20a von der Fläche 24c unpolarisiert transmittiert und das Sendelicht 22 der unteren Lichtquellen 20b von der Fläche 20a linear polarisiert. Die dabei auftretende Änderung der Polarisationsrichtung um 180° spielt keine Rolle, zum einen, weil sich auch die Polarisationsrichtung des Empfangslichts 12 entsprechend dreht, und vor allem weil es nur um die relative Verdrehung der Polarisationsrichtung um 90° zwischen Sendelicht 22 und Empfangslicht 12 ankommt.

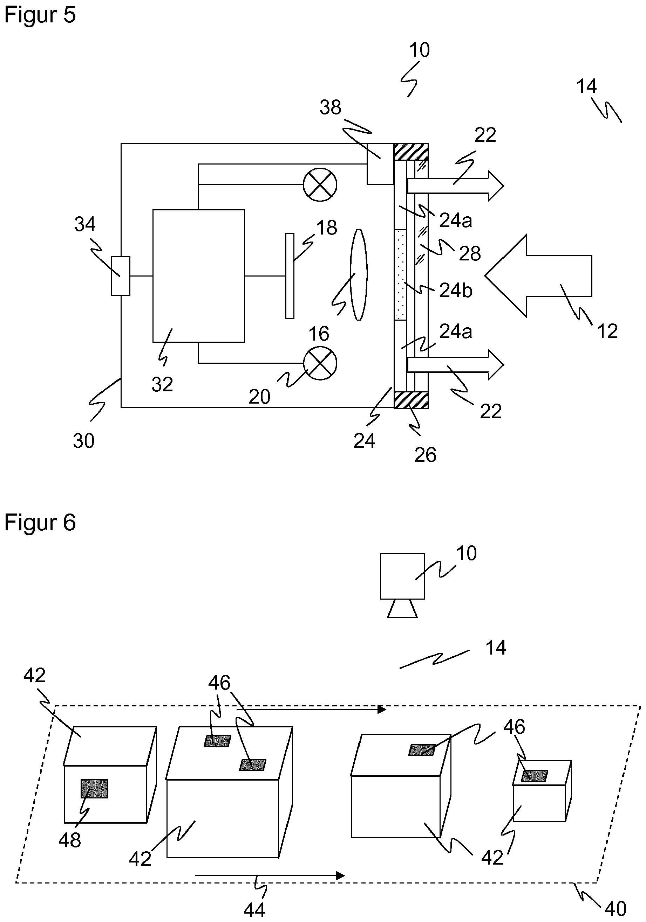

Figur 5 zeigt eine schematische Schnittdarstellung einer weiteren Ausführungsform der Kamera 10. Im Unterschied zu Figur 1 ist hier ein zusätzlicher Anwesenheitssensor 38 vorgesehen, welcher erkennt, ob ein Aufsteckrahmen 26 mit einem Polarisationsfilter 24 aufgesteckt ist oder nicht. Der Anwesenheitssensor 38 ist nur rein schematisch gezeigt und beispielsweise aus einem oder mehreren Hall-Sensoren oder induktiven Sensoren aufgebaut, die einen entsprechenden magnetisierten oder metallischen Aufsteckrahmen 26 erkennen. Durch Erfassung an mehreren Punkten und entsprechende Ausgestaltung von Material und Geometrie des Aufsteckrahmens 26 an den korrespondierenden Stellen kann eine Art einfacher Code durch veränderte Anwesenheitssignale geschaffen werden, mit dem verschiedene Aufsteckrahmen 26 und damit Polarisationsfilter 24 unterschieden werden. Eine solche differenzierte Anwesenheitserfassung kann auch unterschiedliche Orientierungen unterscheiden, wie sie unter Bezugnahme auf die Figur 4 erläutert wurden.

Die Identifizierung des jeweiligen Polarisationsfilters 24, beziehungsweise die Erkennung, dass kein Polarisationsfilter 24 aufgesteckt ist, ermöglicht eine automatische, gezielte Anpassung von Kameraparametern. Beispiele für solche Einstellungen der Kamera 10 sind die Helligkeit der Lichtquellen 20 oder die Empfindlichkeit (Gain) des Bildsensors 18. Außerdem ist dies nützlich, wenn die Kamera 10 in ein übergeordnetes System eingebunden ist. Für eine Wartung per Internet oder eine Datenübertragung und -auswertung aus der Ferne insbesondere in einer Cloud oder einem anderen Netzwerk kann es wichtig sein, die aktuelle Konfiguration der Kamera 10 zu kennen und dafür den Anwesenheitssensor 38 abzufragen.

Figur 6 zeigt eine mögliche Anwendung der Kamera 10 in Montage an einem Förderband 40, welches Objekte 42, wie durch den Pfeil 44 angedeutet, durch den Erfassungsbereich 14 der Kamera 10 fördert. Die Objekte 42 können an ihren Außenflächen Codebereiche 46 tragen. Aufgabe der Kamera 10 ist, Eigenschaften der Objekte 42 zu erfassen und in einem bevorzugten Einsatz als Codeleser die Codebereiche 46 zu erkennen, die dort angebrachten Codes auszulesen, zu dekodieren und dem jeweils zugehörigen Objekt 42 zuzuordnen. Um auch seitlich angebrachte Codebereiche 48 zu erkennen, werden vorzugsweise zusätzliche, nicht dargestellte Kameras 10 aus unterschiedlicher Perspektive eingesetzt.

## Patentansprüche

1. Kamera (10), insbesondere Codeleser, mit einem Bildsensor (18) zur Erzeugung von Bilddaten aus Empfangslicht (12) aus einem Erfassungsbereich (14), einer Beleuchtungseinheit mit mindestens einer Lichtquelle (20) zum Ausleuchten des Erfassungsbereichs (14) mit Sendelicht (22) und einem Polarisationsfilter (24), welches das Sendelicht (22) und das Empfangslicht (12) polarisiert, mehrere Flächen (24a-c) mit unterschiedlichen Polarisationseigenschaften aufweist und als nachträglich von außen austauschbares Zusatzmodul (26, 24) ausgebildet ist,
**dadurch gekennzeichnet,**
**dass** das Zusatzmodul (26, 24) in verschiedenen Orientierungen an der Kamera (10) anbringbar ist.

2. Kamera (10) nach Anspruch 1,
wobei das Polarisationsfilter (24) als Aufsteckmodul mit einer Schnappverbindung (36) ausgebildet ist.

3. Kamera (10) nach Anspruch 1,
wobei das Polarisationsfilter (24) als Aufsteckmodul mit einer Magnetverbindung ausgebildet ist.

4. Kamera (10) nach einem der vorhergehenden Ansprüche,
wobei das Polarisationsfilter (24) vor einer Frontscheibe (28) der Kamera (10) angeordnet ist, oder wobei das Zusatzmodul (26, 24, 28) die Frontscheibe (28) aufweist.

5. Kamera (10) nach einem der vorhergehenden Ansprüche,
wobei das Zusatzmodul (26, 24) einen Wechselrahmen (26) aufweist, der ein Gehäuse (30) der Kamera (10) zu dessen Fronseite hin abschließt.

6. Kamera (10) nach einem der vorhergehenden Ansprüche,
wobei das Zusatzmodul (26, 24) rechteckig ist.

7. Kamera (10) nach einem der vorhergehenden Ansprüche,
wobei die Beleuchtungseinheit mehrere separat ansteuerbare Gruppen von Lichtquellen (20a-b) aufweist.

8. Kamera (10) nach Anspruch 7,
wobei die Lichtquellen (20a) einer Gruppe eine andere Farbe aufweisen als die Lichtquellen (20b) einer anderen Gruppe.

9. Kamera (10) nach einem der vorhergehenden Ansprüche,
wobei das Zusatzmodul (26, 24) mit einer ersten Fläche (24a) zum Polarisieren des Sendelichts (22) und einer zweiten Fläche (24b) zum Polarisieren des Empfangslichts (12) ausgebildet ist.

10. Kamera (10) nach Anspruch 9,
wobei das Zusatzmodul (26, 24) eine Fläche (24c) für den Durchtritt von Sendelicht (22) ohne Polarisierung aufweist.

11. Kamera (10) nach einem der vorhergehenden Ansprüche
mit einem Anwesenheitssensor (38) zur Erkennung, ob ein Zusatzmodul (26, 24) im Strahlengang der Kamera (10) angeordnet ist.

12. Kamera (10) nach einem der vorhergehenden Ansprüche,
die eine Steuer- und Auswertungseinheit (32) aufweist, die dafür ausgebildet ist, in den Bilddaten Codebereiche zu identifizieren und deren Codeinhalt auszulesen.

## Claims

1. A camera (10), in particular a code reader, comprising an image sensor (18) for generating image data from received light (12) from a detection zone (14), a lighting unit having at least one light source (20) for illuminating the detection zone (14) with transmitted light (22) and a polarization filter (24) that polarizes the transmitted light (22) and the received light (12), comprises a plurality of surfaces (24a-c) of different polarization properties and is configured as an additional module (26, 24) subsequently replaceable from the outside,
**characterized in that** the additional module (26, 24) can be attached to the camera (10) in different orientations.

2. The camera (10) in accordance with claim 1,
wherein the polarization filter (24) is configured as a plug-on module having a snap connection (36).

3. The camera (10) in accordance with claim 1,
wherein the polarization filter (24) is configured as a plug-on module having a magnetic connection.

4. The camera (10) in accordance with any of the preceding claims,
wherein the polarization filter (24) is arranged in front of a front screen (28) of the camera (10) or wherein the additional module (26, 24, 28) comprises the front screen (28).

5. The camera (10) in accordance with any of the preceding claims,
wherein the additional module (26, 24) comprises a changeable frame (26) that terminates a housing (30) of the camera (10) toward its front side.

6. The camera (10) in accordance with any of the preceding claims,
wherein the additional module (26, 24) is rectangular.

7. The camera (10) in accordance with any of the preceding claims,
wherein the lighting unit has a plurality of separately controllable groups of light sources.

8. The camera (10) in accordance with claim 7,
wherein the light sources (20a) of one group have a different color than the light sources (20b) of another group.

9. The camera (10) in accordance with any of the preceding claims,
wherein the additional module (26, 24) is configured with a first surface (24a) for polarizing the transmitted light (22) and with a second surface (24b) for polarizing the received light (12).

10. The camera (10) in accordance with any of the preceding claims,
wherein the additional module (26, 24) has a surface (24c) for the passage of transmitted light (22) without polarization.

11. The camera (10) in accordance with any of the preceding claims,
further comprising a presence sensor (38) for detecting whether an additional module (26, 24) is arranged in the optical path of the camera (10).

12. The camera (10) in accordance with any of the preceding claims,
further comprising a control and evaluation unit (32) that is configured to identify code regions in the image data and to read their code content.

## Revendications

1. Caméra (10), en particulier lecteur de code, comprenant un capteur d'images (18) pour générer des données d'images à partir d'une lumière de réception (12) en provenance d'une zone de détection (14), une unité d'éclairage pourvue d'au moins une source de lumière (20) pour éclairer la zone de détection (14) avec une lumière d'émission (22), et un filtre de polarisation (24) qui polarise la lumière d'émission (22) et la lumière de réception (12) et qui présente plusieurs surfaces (24a - c) ayant différentes propriétés de polarisation et qui est réalisé sous forme de module supplémentaire (26, 24) interchangeable à posteriori depuis l'extérieur,
**caractérisée en ce que**
le module supplémentaire (26, 24) peut être monté sur la caméra (10) dans différentes orientations.

2. Caméra (10) selon la revendication 1,
dans laquelle le filtre de polarisation (24) est réalisé sous forme de module enfichable ayant une liaison d'encliquetage (36).

3. Caméra (10) selon la revendication 1,
dans laquelle le filtre de polarisation (24) est réalisé sous forme de module enfichable ayant une liaison magnétique.

4. Caméra (10) selon l'une des revendications précédentes,
dans laquelle le filtre de polarisation (24) est disposé devant une vitre frontale (28) de la caméra (10), ou le module supplémentaire (26, 24, 28) comprend la vitre frontale (28).

5. Caméra (10) selon l'une des revendications précédentes,
dans laquelle le module supplémentaire (26, 24) comprend un cadre interchangeable (26) qui referme un boîtier (30) de la caméra (10) vers sa face frontale.

6. Caméra (10) selon l'une des revendications précédentes,
dans laquelle le module supplémentaire (26, 24) est rectangulaire.

7. Caméra (10) selon l'une des revendications précédentes,
dans laquelle l'unité d'éclairage comprend plusieurs groupes de sources de lumière (20a - b) pilotables séparément.

8. Caméra (10) selon la revendication 7,
dans laquelle les sources de lumière (20a) d'un groupe ont une couleur différente de celle des sources de lumière (20b) d'un autre groupe.

9. Caméra (10) selon l'une des revendications précédentes,
dans laquelle le module supplémentaire (26, 24) est réalisé avec une première surface (24a) pour polariser la lumière d'émission (22) et avec une seconde surface (24b) pour polariser la lumière de réception (12).

10. Caméra (10) selon la revendication 9,
dans laquelle le module supplémentaire (26, 24) comprend une surface (24c) pour le passage de la lumière d'émission (22) sans polarisation.

11. Caméra (10) selon l'une des revendications précédentes,
comportant un capteur de présence (38) pour détecter si un module supplémentaire (26, 24) est disposé dans le chemin optique de la caméra (10).

12. Caméra (10) selon l'une des revendications précédentes,
comportant une unité de commande et d'évaluation (32) qui est réalisée pour identifier des zones de code dans les données d'images et pour lire leur contenu de code.
